# EUROPÄISCHE PATENTANMELDUNG

(11) **EP 3 138 717 A1**
(43) Veröffentlichungstag der Anmeldung: **08.03.2017**
(21) Anmeldenummer: 15183255.7
(22) Anmeldetag: 01.09.2015
(51) Int. Cl.: B60K 15/04

(54) **EINFÜLLKOPF**

(71) Anmelder: Magna Steyr Fuel Systems GesmbH, 8261 Sinabelkirchen (AT)
(72) Erfinder: HENDLER, René, 8020 Graz (AT); STEINMANN, Dominik, 8223 Stubenberg (AT)
(74) Vertreter: Zangger, Bernd

(57) **Zusammenfassung**

Ein Einfüllkopf für ein Kraftstoffeinfüllrohr, umfassend ein Gehäuse (1) des Einfüllkopfes und eine Strömungsführung (2), wobei die Strömungsführung (2) und das Gehäuse (1) einteilig aus Metall ausgebildet sind und ein Verfahren zur Herstellung eines solchen Einfüllkopfes.

## Beschreibung

### Gebiet der Erfindung

Die vorliegende Erfindung betrifft einen Einfüllkopf für ein Kraftstoffeinfüllrohr.

### Stand der Technik

Kraftstofftankbehälter werden üblicherweise über ein Einfüllrohr betankt, das an seinem beim Betanken einer Zapfpistole zugewandten Ende einen Einfüllkopf, auch Einfüllstutzen genannt, aufweist. Solche Einfüllköpfe sind an sich bekannt und können auch Zusatzfunktionen erfüllen, wie die Aufnahme eines Tankverschlusses, die Anbindung eines Entlüftungsnippels zur Entlüftung während einer Betankung oder die Integration eines strömungsführenden Bauteils, auch "Flow Guide" oder "Fixiertopf" genannt, der dem Kraftstoff beim Betanken eine gewünschte Fließrichtung aufprägt.

Solche Einfüllköpfe oder Einfüllstutzen sind beispielsweise aus der DE 10 2006 056 974 A1 oder der DE 198 50 904 C2 bekannt. Einfüllköpfe können beispielsweise Gehäuse aus Blech oder auch aus Kunststoff aufweisen. Strömungsführungen werden aus Kunststoff ausgebildet, teilweise aus leitfähigem Kunststoff um eine Erdung über die Strömungsführung zu ermöglichen. Durch den Kontakt der Strömungsführung mit Kraftstoff kommt es im Betrieb jedoch zur Quellung einer derartigen Strömungsführung und somit zu erhöhtem elektrischem Widerstand und schlechter Erdung.

Zum Abführen möglicher elektrostatischer Aufladungen bei einer Betankung werden Einfüllköpfe und deren Strömungsführungen oft über aufwändige Erdungsleitungen und -anschlüsse geerdet.

### Zusammenfassung der Erfindung

Es ist eine Aufgabe der Erfindung, einen Einfüllkopf für ein Kraftstoffeinfüllrohr anzugeben, der auf einfache und kostengünstige Art hergestellt werden kann, wobei eine zuverlässige Erdung des Einfüllkopfes ermöglicht werden soll, und ein Verfahren zu Herstellung des Einfüllkopfes.

Die Lösung der Aufgabe erfolgt durch einen Einfüllkopf für ein Kraftstoffeinfüllrohr, umfassend ein Gehäuse des Einfüllkopfes und eine Strömungsführung, wobei die Strömungsführung und das Gehäuse einteilig aus Metall ausgebildet sind.

Erfindungsgemäß wird eine Strömungsführung, also ein Flow-Guide, einteilig mit dem Gehäuse des Einfüllkopfes aus Metall hergestellt. Ein Erdungspfad ist dadurch auf einfachste und zuverlässige Weise über die Metall-Strömungsführung gegeben, ohne Verwendung von zusätzlichen Erdungsleitungen zur Verbindung von Strömungsführung und Gehäuse und ohne Gefahr einer abnehmenden Erdung im Betrieb.

In einem erfindungsgemäßen Verfahren zur Herstellung eines solchen Einfüllkopfes, umfassend zumindest Gehäuse und Strömungsführung, wird der Einfüllkopf, umfassend Gehäuse und Strömungsleiteinrichtung, einteilig aus Metall hergestellt, bevorzugt wird der Einfüllkopf durch Feingießen oder Metal-Injection-Moulding hergestellt.

Durch Integration der beiden Bauteile, Gehäuse und Strömungsführung, in einem einzigen Metall-Bauteil wird die Produktion einfacher und kostengünstiger, da Werkzeugkosten verringert, die Lagerhaltung vereinfacht und Fügeoperationen eingespart werden können. Zudem wird der Aufwand zur Einhaltung vorgegebener Toleranzen verringert und die Emissionswerte für Kohlenwasserstoffe werden auf Grund der fehlenden Bauteil-Schnittstellen verringert. Aus diesen Gründen werden bevorzugt die Funktionen weiterer üblicherweise getrennter Bauteile einteilig durch den Metall-Einfüllkopf ausgebildet.

Vorzugsweise umfasst der Einfüllkopf einen Karosseriehalter und der Karosseriehalter ist ebenfalls einteilig mit dem Gehäuse aus Metall ausgebildet. Der Karosseriehalter dient der Befestigung des Einfüllkopfes an einer Karosserie eines Fahrzeuges.

Bevorzugt umfasst der Einfüllkopf eine Tankverschlussaufnahme, insbesondere eine Bajonettkappe, zur Befestigung eines Tankverschlusses, und auch die Tankverschlussaufnahme bzw. Bajonettkappe ist einteilig mit dem Gehäuse aus Metall ausgebildet.

Vorzugsweise umfasst der Einfüllkopf eine Nippelaufnahme und/oder einen Entlüftungsnippel und die Nippelaufnahme und/oder der Entlüftungsnippel ist einteilig mit dem Gehäuse aus Metall ausgebildet.

Der Einfüllkopf ist bevorzugt ein Feingussbauteil oder ein Metal-Injection-Moulding-Bauteil.

Bevorzugt besteht das Gehäuse aus Stahl, besonders bevorzugt aus Edelstahl und weist eine Wandstärke von maximal 2 mm, bevorzugt maximal 1 mm, auf.

Der Einfüllkopf wird bevorzugt durch Feingießen mit Hilfe eines Wachsausschmelzkerns hergestellt, insbesondere mit Hilfe eines Spritzgusskerns oder eines Rapid-Prototyping-Kerns.

Nach dem Feingießen oder Metal-Injection-Moulding wird der Einfüllkopf bevorzugt spanend nachbearbeitet.

### Kurzbeschreibung der Zeichnungen

Die Erfindung wird im Folgenden beispielhaft unter Bezugnahme auf die Zeichnungen beschrieben.
- Fig. 1: ist eine Schnittansicht eines bekannten Einfüllkopfes aus dem Stand der Technik.
- Fig. 2: ist eine dreidimensionale Schnittdarstellung eines erfindungsgemäßen Einfüllkopfes.

### Detaillierte Beschreibung der Erfindung

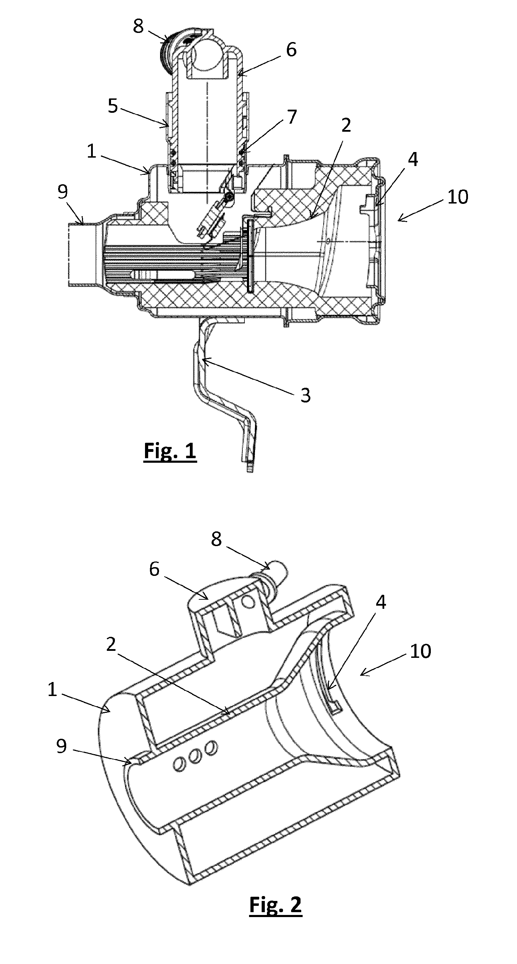

In Fig. 1 ist ein bekannter Einfüllkopf für ein Kraftstoffeinfüllrohr dargestellt. Der Einfüllkopf ist aus einer Anzahl verschiedenster Bauteil zusammengebaut. In das Gehäuse 1 des Einfüllkopfes ist eine Strömungsführung 2 aus Kunststoff montiert. Diese leitet den Kraftstoff der mittels einer Zapfpistole an einer Betankungsöffnung 10 des Einfüllkopfes, in Fig. 1 rechts, zugeführt wird, in Richtung zu einem am entgegengesetzten Ende des Einfüllkopfes befindlichen Einfüllrohr oder Einfüllrohranschluss 9. An der Betankungsöffnung 10 befindet sich eine Tankverschlussaufnahme 4, insbesondere ein Bajonettverschluss, zur Aufnahme eines Tankverschlusses. Angebaut an das Gehäuse 1 des Einfüllkopfes ist zudem ein Karosseriehalter 3 und eine im Wesentlichen zylinderförmige Nippelaufnahme 5 mit eingesetztem Entlüftungsnippel 6 der über einen Aktivkohlefilteranschluss 8 mit einem Aktivkohlefilter verbindbar ist. Zwischen Nippelaufnahme 5 und Entlüftungsnippel 6 sind zur Abdichtung Ringdichtungen 7 angeordnet.

Ein erfindungsgemäßer Einfüllkopf ist in Fig. 2 dargestellt. Dieser Einfüllkopf ist zur Gänze einteilig aus Stahl ausgebildet und umfasst ein Gehäuse 1 und eine Strömungsführung 2, wobei das Gehäuse 1 mit der Strömungsführung 2 zusammen im Wesentlichen einen hohlen Zylindermantel ausbilden.

Der Einfüllkopf umfasst ferner im Bereich einer Betankungsöffnung 10 eine Tankverschlussaufnahme 4, insbesondere einen Bajonettverschluss, wobei die Tankverschlussaufnahme 4 ebenfalls einteilig mit dem Gehäuse 1 aus Stahl ausgebildet ist.

Ferner umfasst der Einfüllkopf einen Entlüftungsnippel 6 mit einem Aktivkohlefilteranschluss 8. Entlüftungsnippel 6 und bevorzugt auch Aktivkohlefilteranschluss 8 sind wiederum einteilig mit dem Gehäuse 1 aus Stahl ausgebildet.

Der Einfüllkopf kann auch - hier nicht dargestellt - einen Karosseriehalter 3 umfassen, der einteilig mit dem Gehäuse 1 ausgebildet ist.

Das Stahl-Gehäuse 1 weist eine Wandstärke von ca. 1 mm auf.

Der gesamte Einfüllkopf ist ein einziges Feingussbauteil oder ein einziges Metal-Injection-Moulding-Bauteil.

### Bezugszeichenliste

- 1: Gehäuse
- 2: Strömungsführung
- 3: Karosseriehalter
- 4: Tankverschlussaufnahme
- 5: Nippelaufnahme
- 6: Entlüftungsnippel
- 7: Ringdichtung
- 8: Aktivkohlefilteranschluss
- 9: Einfüllrohranschluss
- 10: Betankungsöffnung

## Patentansprüche

1. Einfüllkopf für ein Kraftstoffeinfüllrohr, umfassend ein Gehäuse (1) des Einfüllkopfes und eine Strömungsführung (2),
**dadurch gekennzeichnet, dass** die Strömungsführung (2) und das Gehäuse (1) einteilig aus Metall ausgebildet sind.

2. Einfüllkopf nach Anspruch 1,
**dadurch gekennzeichnet dass** der Einfüllkopf einen Karosseriehalter (3) umfasst und der Karosseriehalter (3) einteilig mit dem Gehäuse (1) aus Metall ausgebildet ist.

3. Einfüllkopf nach zumindest einem der vorhergehenden Ansprüche,
**dadurch gekennzeichnet dass** der Einfüllkopf eine Tankverschlussaufnahme (4) umfasst und die Tankverschlussaufnahme (4) einteilig mit dem Gehäuse (1) aus Metall ausgebildet ist.

4. Einfüllkopf nach zumindest einem der vorhergehenden Ansprüche,
**dadurch gekennzeichnet dass** der Einfüllkopf eine Nippelaufnahme (5) und/oder einen Entlüftungsnippel (6) umfasst und die Nippelaufnahme (5) und/oder der Entlüftungsnippel (6) einteilig mit dem Gehäuse (1) aus Metall ausgebildet ist.

5. Einfüllkopf nach zumindest einem der vorhergehenden Ansprüche,
**dadurch gekennzeichnet dass** der Einfüllkopf ein Feingussbauteil ist oder ein Metal-Injection-Moulding-Bauteil.

6. Einfüllkopf nach zumindest einem der vorhergehenden Ansprüche,
**dadurch gekennzeichnet dass** das Gehäuse (1) aus Stahl, bevorzugt aus Edelstahl besteht.

7. Einfüllkopf nach zumindest einem der vorhergehenden Ansprüche,
**dadurch gekennzeichnet dass** das Gehäuse (1) eine Wandstärke von maximal 2 mm, bevorzugt maximal 1 mm, aufweist.

8. Verfahren zur Herstellung eines Einfüllkopfes nach zumindest einem der vorhergehenden Ansprüche,
**dadurch gekennzeichnet dass** der Einfüllkopf, umfassend Gehäuse (1) und Strömungsführung (2), einteilig aus Metall hergestellt wird.

9. Verfahren nach Anspruch 8,
**dadurch gekennzeichnet dass** der Einfüllkopf durch Feingießen oder Metal-Injection-Moulding hergestellt wird.

10. Verfahren nach zumindest einem der Ansprüche 8 bis 9,
**dadurch gekennzeichnet dass** der Einfüllkopf durch Feingießen mit Hilfe eines Wachsausschmelzkerns hergestellt wird, insbesondere mit Hilfe eines Spritzgusskerns oder eines Rapid-Prototyping-Kerns.

11. Verfahren nach zumindest einem der Ansprüche 8 bis 10,
**dadurch gekennzeichnet dass** der Einfüllkopf nach dem Feingießen oder Metal-Injection-Moulding spanend nachbearbeitet wird.
